# EUROPÄISCHE PATENTSCHRIFT

(11) **EP 0 544 113 B1**
(45) Veröffentlichungstag und Bekanntmachung des Hinweises auf die Patenterteilung: **19.06.1996**
(21) Anmeldenummer: 92118386.9
(22) Anmeldetag: 28.10.1992
(51) Int. Cl.: B62D 1/18

(54) **Verstellbare Lenksäule für Nutzkraftfahrzeuge**
Adjustable steering column for commercial motor vehicles
Colonne de direction réglable pour véhicules à moteur utilitaires

(30) Priorität: 23.11.1991 DE 4138583
(43) Veröffentlichungstag der Anmeldung: 02.06.1993
(73) Patentinhaber: LEMFOERDER METALLWAREN AG., D-49441 Lemförde (DE)
(72) Erfinder: Ersoy, Metin, Dr.-Ing., W-6229 Walluf 2 (DE); Uphaus, Ludger, Dipl.-Ing., W-2846 Neuenkirchen (DE)
(74) Vertreter: Bruse, Willy Hans Heinrich

(56) Entgegenhaltungen:
- EP-A- 0 222 628
- EP-A- 0 242 928
- DE-A- 2 054 116
- DE-A- 3 801 630
- FR-A- 2 135 568

## Beschreibung

Die Erfindung betrifft die Ausbildung einer stufenlos verstellbaren Lenksäule für Nutzkraftfahrzeuge mit Gattungsmerkmalen nach dem Oberbegriff des Patentanspruches 1.

Bekannt sind diese Merkmale aus der DE-PS 38 01 630, in der eine relativ einfache und robuste Lenksäule zur Höhen- und Neigungsverstellung des Lenkrades von Personenkraftwagen offenbart ist. Bei dieser Anordnung sind in einem kalottenförmigen, zweiteiligen Gehäuse Zwei außen kugelige Klemmbacken für ein die Lenkwelle umschließendes Mantelrohr angeordnet, wobei eine Exzenterspannvorrichtung das axiale Zusammenpressen der beiden Gehäuseteile ermöglicht, so daß daraus resultierende radiale Spannkräfte einen Reibungsschluß zwischen dem einen an der Karosserie festen Gehäuseteil und dem Mantelrohr bewirken.

Die Anforderung an verstellbare Lenksäulen von Omnibussen, Lastkraftwagen und anderen Nutzkraftfahrzeugen sind wesentlich größer als bei Personenkraftwagen. Allein die auf das Lenkrad eines Nutzkraftfahrzeugs, zum Beispiel beim Einsteigen des Fahrers, wenn dieser sich am Lenkrad abstützt oder hochzieht, wirkenden Kräfte sind beträchtlich höher. Durch den größeren Lenkraddurchmesser werden außerdem höhere Drehmomente und Kippmomente wirksam. Schließlich ist die Winkellage der Lenksäule eines Nutzkraftfahrzeuges steiler als bei einem Personenkraftwagen, so daß das Gewicht des Fahrers im Crash-Fall mit einem ungünstigen Winkel auf das Lenkrad prallt, so daß die Klemmung einer stufenlos verstellbaren Lenksäule schon aus Sicherheitsgründen stärker als bei Personenkraftwagen ausgeführt sein muß.

Bei Nutzkraftfahrzeugen sind stufenlos verstellbare Lenksäulen bekannt, bei denen die Klemmvorrichtung aus einer das Mantelrohr umschlingenden Klemmschelle und zwei zueinander parallelen Blechhaltern mit einem querverlaufenden Langloch sowie einer die Klemmschelle und das Langloch der Blechhalter durchsetzenden Klemmschraube besteht. Das Langloch ermöglicht bei gelöster Klemmschraube die Höhenverstellung des Lenkrades. Das Prinzip solcher Klemmvorrichtungen ist in unterschiedlicher Ausführung in der DE-PS 20 57 116 und der EP-0 242 928 - A1 - offenbart. Bei Anordnungen mit einer Neigungsverstellmöglichkeit des Lenkrades ist das Gehäuse der Lenksäule mit dem hinteren unteren Ende um eine Querachse schwenkbar an der Kabinenfrontwand befestigt. Die Bedienung der Klemmvorrichtung erfolgt durch Handhebel, die beispielsweise auf eine Spannschraube oder eine Exzenterklemmvorrichtung einwirken. Es ist aber auch bekannt, die Klemmkräfte durch die Reaktionskraft einer vorgespannten Feder hervorzurufen und für das Lösen der Klemmvorrichtung das Druckluftnetz des Fahrzeuges auszunutzen, wobei pneumatisch initiierte Kolbenkräfte die vorgespannte Feder überwinden. Die Betätigung der Lösevorrichtung erfolgt nicht nur von Hand, sondern in einigen bekannten Fällen auch durch einen Fußschalter.

Ein besonderes Problem bei der Gestaltung der verstellbaren Lenksäulen für Nutzkraftfahrzeuge besteht darin, daß die aus Sicherheitsgründen an die Kraftübertragung zu stellenden Anforderungen nur mangelhaft erfüllt werden können. Eine Erhöhung der Klemmkräfte vorhandener Konstruktionen ist nicht ohne weiteres möglich, weil dies auch zu einer beträchtlichen Erhöhung der Bedienungskräfte führen würde, die von dem Lenker des Fahrzeuges nicht mehr aufgebracht werden oder ihm nicht mehr zugemutet werden können.

Es ist Aufgabe der Erfindung, eine von Hand oder motorisch betätigbare Klemmvorrichtung für stufenlos verstellbare Lenksäulen in Nutzkraftfahrzeugen der Gattung nach dem Oberbegriff des Patentanspruches 1 unter Berücksichtigung maximaler Sicherheitsanforderungen in der Weise auszubilden, daß wesentlich größere Klemmkräfte ohne Steigerung der Bedienungskräfte möglich sind und das Lenksäulengehäuse unmittelbar am Boden der Fahrerkabine befestigt werden kann.

Die Erfindung zur Lösung dieser Aufgabe besteht in einer Ausbildung mit Merkmalen nach dem Kennzeichen des Patentanspruches 1.

Durch die Verspannung der beiden Gehäuseteile beidseitig neben dem Mantelrohr wird eine beträchtliche Vergrößerung der Reibungskräfte zwischen dem Mantelrohr und dem Gehäuse der Lenksäule erreicht. Das Gehäuse kann andererseits auf dem Boden der Fahrerkabine unmittelbar befestigt werden, wodurch eine Komplettmontage der Lenksäule vor dem Einbau in das Fahrzeug möglich wird. Damit einher geht auch der Vorteil, daß sich Teile des Lenksäulengehäuses bei der Verstellung des Lenkrades nicht bewegen und der Raum unter der Lenksäule durch Elemente der Kippverstellung nicht eingeengt wird. Trotzdem besteht die Lenksäule mit der Klemmvorrichtung für die Verstellelemente aus relativ wenig Teilen in jeweils doppelter Ausführung, die spiegelbildlich versetzt montiert sind, so daß eine kostengünstige Herstellung und einfache Montage erreicht wird. Alle notwendigen Justierungen der Lenksäule können vor dem Einbau in das Fahrzeug durchgeführt werden. Bei der Verstellung bewegt sich nur das Lenkrad und ein gegebenenfalls vorgesehenes Lenkschloß, so daß nur ein relativ kleiner Schlitz zwischen dem Gehäuse und der Lenkwelle abzudecken ist und auf Faltenbälge oder dergleichen verzichtet werden kann.

Bei einer bevorzugten Ausführungsform ist auf beiden Seiten neben dem Mantelrohr wenigstens ein Spannbolzen für das Zusammenpressen der im Querschnitt u-förmigen Gehäuseteile, der Klemmbacken und des Mantelrohres vorgesehen. Den Reibungsschluß bewirken Reaktionskräfte aus Federn, mit denen die Spannbolzen in axialer Richtung belastet sind. Die Federkräfte lassen sich dabei auf eine optimale Klemmung abstimmen. Das Lösen der Klemmverbindung wird nach einer weiteren Ausgestaltung der Erfindung durch eine pneumatisch beaufschlagte Kolben-Zylinder-Einheit eingeleitet, die in axialer Richtung gegen die Federkräfte auf die Spannbolzen einwirkt.

Zu den bemerkenswerten Vorteilen der vorgeschlagenen Lösung gehört es schließlich, daß zwischen den einander gegenüberliegenden Flächen der beiden Klemmbacken weitere Klemmschuhe angeordnet sein können, die fest mit dem Gehäuse oder der Karosserie des Fahrzeuges verbunden sind und zusätzliche Reibflächen an ihrer Oberfläche für Reibflächen an den Klemmbacken bilden. Dies führt gegenüber herkömmlichen Anordnungen zu einer Vermehrung der Reibflächen und zu einer Vergrößerung der Klemmkräfte, so daß eine erfindungsgemäß ausgebildete Klemmvorrichtung wesentlich höher belastbar ist als herkömmliche Ausführungen.

Auf der Zeichnung ist ein Ausführungsbeispiel der Erfindung dargestellt. Es zeigen:
- Figur 1: die Anordnung einer Lenksäule in der Fahrerkabine eines Nutzkraftfahrzeugs,
- Figur 2: einen Schnitt nach der Linie B - B der Figur 3, jedoch in einem gegenüber dieser verkleinerten Maßstab und
- Figur 3: einen Schnitt nach der Linie A - A der Figur 2, jedoch in einem gegenüber dieser vergrößerten Maßstab.

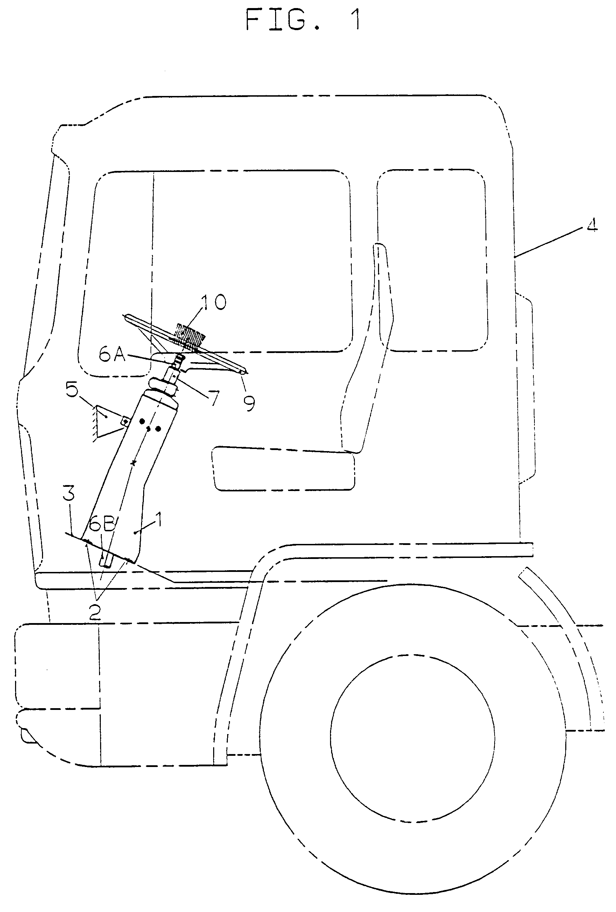

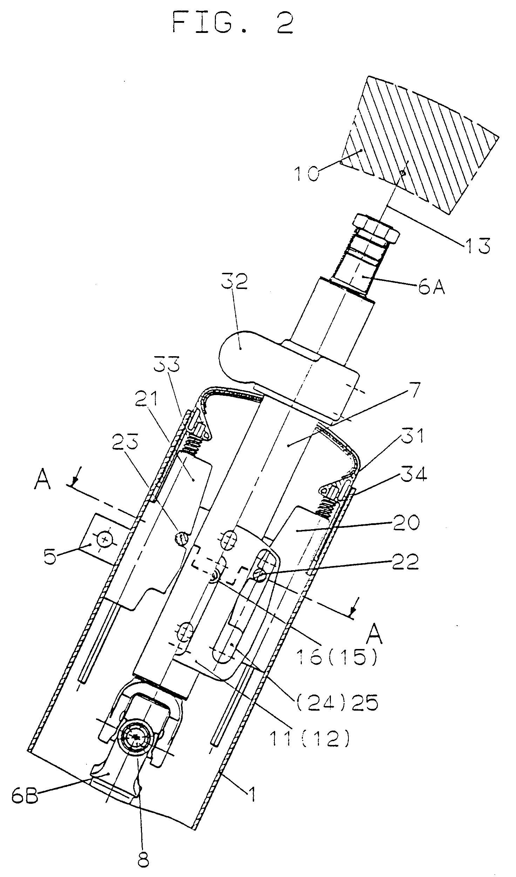

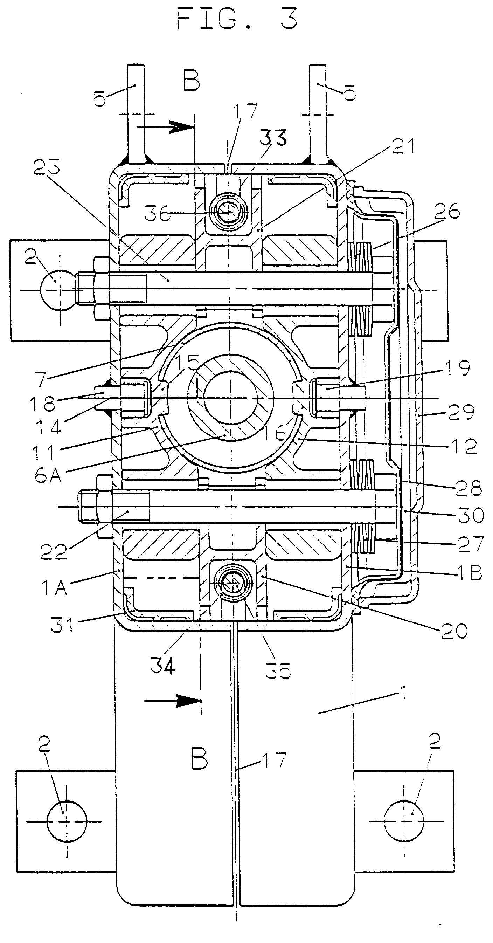

Die Lenksäule nach der Erfindung und dem Ausführungsbeispiel weist ein Gehäuse 1 auf, welches mittels Schrauben 2 auf dem Bodenblech 3 der Fahrerkabine 4 eines Nutzfahrzeuges befestigt ist. Ein weiteres Befestigungselement 5 befindet sich zwischen dem oberen Ende des Gehäuses 1 und der in der Zeichnung nicht dargestellten Frontwand der Fahrerkabine 4. Das obere Teil 6a der Lenkwelle ist drehbar in einem Mantelrohr 7 gelagert und durch ein Kreuzgelenk 8 mit dem unteren Teil 6b der Lenkwelle verbunden. Das freie, aus dem Mantelrohr 7 herausgeführte Oberende des Lenkwellenteiles 6a dient zur Befestigung des Lenkrades 9, welches sowohl in der Höhe als auch in der Neigung einstellbar sein soll. Der Verstellbereich ist in den Figuren 1 und 2 mit der schraffierten Fläche 10 symbolisiert. Eine die Arretierung des Mantelrohres 7 in dem Gehäuse 1 in jeder Höhenlage und Winkellage innerhalb des Verstellbereiches bewirkende Klemmvorrichtung weist zwei einander gegenüberliegende Klemmbacken 11 und 12 auf, deren innere Kontur der Außenkontur des Mantelrohres 7 angepaßt ist. In Höhe einer quer zur Längsachse 13 der Lenkwelle 6 verlaufenden Querachse 14, die die Kippachse für die Neigungsverstellung des Lenkrades 9 bildet, weisen beide Klemmbacken 11 und 12 an ihrer Innenseite einen warzen- oder noppenförmigen Vorsprung 15, 16 auf, der in eine Bohrung des Mantelrohres 7 eingreift, so daß die Klemmbacken 11 und 12 bei der Höhen- und bei der Neigungsverstellung gemeinsam mit dem Mantelrohr 7 bewegt werden. Die Klemmbacken 11 und 12 sind innerhalb des in diesem Bereich im Querschnitt etwa rechteckigen und an den kurzen Seiten geschlitzten Gehäuses 1 angeordnet. Im Beispiel wird das Gehäuse 1 aus zwei U-Profilen 1a und 1b gebildet, die mit ihren offenen Seiten gegeneinander gerichtet sind, so daß zwischen den freien Schenkelenden ein Schlitz 17 entsteht, der eine elastische Verformung der beiden U-Profile 1a und 1b relativ zueinander ermöglicht. An der Innenseite der beiden U-Profile 1a und 1b sind die Klemmbacken 11 und 12 in dem erwähnten Verstellbereich linear beweglich und um die Querachse 14 begrenzt verschwenkbar geführt. Dazu dienen Zapfen 18 und 19, die in eine längsgerichtete Ausnehmung an der Rückseite der Klemmbacken 11 und 12 eingreifen und zur Verbesserung des Verstellkomforts als reibungsarme Gleitführungen ausgebildet sind. Auf jeder Seite neben dem Mantelrohr 7 ist zwischen den beiden Klemmbacken 11 und 12 ein Klemmschuh 20 bzw. 21 angeordnet, der fest mit dem unteren Bereich des Gehäuses 1 verbunden ist, so daß für die Klemmung wirksame Reibflächen nicht nur zwischen den Außenflächen der Klemmbacken 11 und 12 und den Innenflächen der U-Profile 1a und 1b, sondern auch zwischen den Außenflächen der beiden Klemmschuhe 20 und 21 und den einander zugekehrten Flächen der Klemmbacken 11 und 12 gebildet werden. Auf jeder Seite neben dem Mantelrohr 7 durchsetzt ein Spannbolzen 22 bzw. 23 ein Langloch 24 bzw. 25 in beiden Klemmbacken 11 und 12 sowie die beiden U-Profile 1a und 1b. Die Langlöcher 24 und 25 in den Klemmbacken 11 und 12 sind in der Breite und in der Länge auf die Verstellbewegungen der Klemmbacken 11 und 12 innerhalb des Verstellbereiches 10 abgestimmt, so daß die in den Gehäuseteilen 1a und 1b lediglich axial beweglichen Spannbolzen 22 und 23 die Verstellbewegung nicht behindern. Beide Spannbolzen 22 und 23 sind mit der Reaktionskraft aus vorgespannten Tellerfedern 26 und 27 belastet, wodurch eine von Bedienkräften unabhängige, gleichbleibende Klemmkraft erreicht wird. Die Ableitung der Spannkräfte aus der Reaktionskraft vorgespannter Federn ermöglicht eine genaue Bestimmung der Klemmkräfte, die dann nicht mehr von zufälligen Bedienkräften abhängig ist. Zur Lösung der Klemmverbindung ist in dem Ausführungsbeispiel entsprechend Figur 3 eine pneumatisch beaufschlagte und an der Pneumatiksystem des Nutzfahrzeuges angeschlossene Kolben-Zylinder-Einheit vorgesehen. Zwischen einer gegen Kopfausbildungen der Spannbolzen 22 und 23 wirksamen Kolbenfläche 28 und einer diese auf der Außenseite dicht abdeckenden Kappe 29 ist ein Zylinderraum 30 gebildet, der an das Druckluftsystem des Fahrzeugs angeschlossen ist. Bei einer Beaufschlagung des Zylinderraumes 30 mit Druckluft wird der Kolben 28 gegen die Reaktionskraft der Federn 26 und 27 belastet, so daß die Klemmkräfte aufgehoben werden und die Klemmvorrichtung für eine Verstellung des Lenkrades gelöst wird. Eine Entlastung des Zylinderraumes 30 führt selbsttätig zur Herstellung der Klemmverbindung, bei der die Reibflächen zwischen den Klemmbacken 11 und 12 und der Innenfläche der beiden Gehäuseteile 1a und 1b einerseits sowie den Außenflächen der beiden Klemmschuhe 20 und 21 andererseits durch die Reaktionskraft der Federn 26 und 27 fest gegeneinander gepreßt werden. Das obere Ende des Gehäuses 1 ist gegenüber dem Mantelrohr 7 durch eine Kappe 31 aus flexiblem Werkstoff abgedichtet, die teleskopierbar von oben in das Gehäuse 1 aus den beiden Gehäuseteilen 1a und 1b eingreift. Um das Gewicht der verstellbaren Elemente aus dem Lenkrad, dem oberen Teil 6a der Lenkwelle, dem Mantelrohr und gegebenenfalls einem Lenkschloß 32 für eine Verbesserung des Verstellkomforts bei Handverstellung auszugleichen, kann diese Kappe 31 gleichzeitig als Träger für diese Elemente dienen und mittels Federn 33 und 34 am Gehäuse bzw. an mit diesem Gehäuse fest verbundenen Teilen abgestützt sein, wobei die Federkräfte aus das Gewicht der genannten Elemente abgestimmt sind. Führungsstangen 35 und 36 dienen zur exakten Führung der verstellbaren Elemente.

### BEZUGSZEICHENLISTE:

- 1: Gehäuse
- 2: Schraube
- 3: Bodenblech
- 4: Fahrerkabine
- 5: Verbindungselement
- 6: Lenkwelle
- 7: Mantelrohr
- 8: Kreuzgelenk
- 9: Lenkrad
- 10: Flächenschraffur (Verstellbereich)
- 11: Klemmbacke
- 12: Klemmbacke
- 13: Längsachse
- 14: Querachse (Kippachse)
- 15: Vorsprung
- 16: Vorsprung
- 17: Schlitz
- 18: Zapfen
- 19: Zapfen
- 20: Klemmschuh
- 21: Klemmschuh
- 22: Spannbolzen
- 23: Spannbolzen
- 24: Langloch
- 25: Langloch
- 26: Tellerfeder
- 27: Tellerfeder
- 28: Kolben
- 29: Kappe
- 30: Zylinderraum
- 31: Kappe
- 32: Lenkschloß
- 33: Federn
- 34: Federn
- 35: Führungsstange
- 36: Führungsstange

## Patentansprüche

1. Lenksäule in einem Nutzkraftfahrzeug mit einem in der Neigung und in der Höhe stufenlos einstellbaren und durch Reibungsschluß arretierbaren Lenkrad, bei der eine in Längsrichtung teleskopierbare Lenkwelle (6) drehbar in einem Mantelrohr (7) gelagert und dieses axial verschieblich in einer von außen betätigbaren Klemmvorrichtung zwischen einem Klemmbackenpaar (11,12) und zusammen mit diesem Klemmbackenpaar (11,12) in der Neigung verstellbar zwischen gegeneinander verspannbaren Teilen eines an der Karosserie festen Gehäuses (1) angeordnet ist, dadurch gekennzeichnet, daß das Klemmbackenpaar (11,12) zusammen mit dem Mantelrohr (7) zwischen Innenflächen beidseitig neben dem Mantelrohr miteinander verspannbarer Gehäuseteile (1,2) im oberen Endbereich des wenigstens in diesem oberen Endbereich in Längsrichtung geschlitzten, mit dem unteren Ende auf dem Bodenblech (3) der Fahrerkabine (4) befestigten Gehäuses (1) angeordnet ist.

2. Lenksäule nach Anspruch 1, dadurch gekennzeichnet, daß das Gehäuse (1) im Bereich der Spannvorrichtung aus zwei im Querschnitt u-förmigen Profilen (1a,1b) besteht, die mit den offenen Profilseiten gegeneinander gerichtet sind und zwischen ihren Schenkelenden im oberen Gehäusebereich Schlitze (17) bilden, wobei ebene Innenflächen der U-Profile (1a,1b) mit ebenen Flächen an je einer der beiden Klemmbacken (11,12) zusammenwirken.

3. Lenksäule nach den Ansprüchen 1 und 2, dadurch gekennzeichnet, daß auf beiden Seiten neben dem Mantelrohr (7) wenigstens ein Spannbolzen (22,23) für das Zusammenpressen der im Querschnitt u-förmigen Gehäuseteile (1a,1b), der Klemmbacken (11,12) und des Mantelrohres (7) vorgesehen ist.

4. Lenksäule nach den Ansprüchen 1 bis 3, dadurch gekennzeichnet, daß auf die Spannbolzen (22,23) wirksame Federn (26,27) den Reibungsschluß zwischen dem Gehäuse (1) und dem Mantelrohr (7) bewirken.

5. Lenksäule nach den Ansprüchen 1 bis 4, dadurch gekennzeichnet, daß zwischen einander gegenüberliegenden Flächen der beiden Klemmbacken (11,12) beidseitig neben dem Mantelrohr (7) ein Klemmschuh (20,21) fest am Gehäuse (1) angeordnet ist, dessen äußere Flächen mit Reibflächen je einer der beiden Klemmbacken (11,12) zusammenwirken.

6. Lenksäule nach den Ansprüchen 1 bis 5, dadurch gekennzeichnet, daß die Klemmbacken (11,12) an den das Gehäuse (1) bildenden U-Profilen (1a,1b) in Richtung der Lenksäulenlängsachse (13) beweglich und um eine Querachse (14 Kippachse) kippbar geführt sind.

7. Lenksäule nach den Ansprüchen 1 bis 6, dadurch gekennzeichnet, daß die Spannbolzen (22,23) Langlöcher (24,25) der Klemmbacken (11,12) durchgreifen, deren Breite größer als der Spannbolzendurchmesser ausgebildet ist und deren Länge auf den Höhenverstellbereich des Lenkrades (9) abgestimmt ist.

8. Lenksäule nach den Ansprüchen 1 bis 7, dadurch gekennzeichnet, daß zur Aufhebung des durch die Federspannung bewirkten Reibungsschlusses eine pneumatisch beaufschlagte, auf die Spannbolzen (22,23) gegen die Federspannung wirksame Kolben-Zylinder-Einheit (28,29,30) vorgesehen ist.

9. Lenksäule nach Anspruch 6, dadurch gekennzeichnet, daß die Klemmbacken (11,12) je auf einem in der Kippachse (14) liegenden Schwenkzapfen (18,19) am Gehäuse (1) angeordnet sind und mit einem dazu koaxial liegenden Vorsprung in ein sich parallel zur Lenksäulenlängsachse (13) erstreckendes Langloch am Mantelrohr (7) eingreifen.

10. Lenksäule nach einem oder mehreren der Ansprüche 1 bis 9, dadurch gekennzeichnet, daß zwischen den höhenverstellbaren Teilen der Lenksäule und dem Gehäuse (1) Stützfedern (33,34) angeordnet sind, die das Gewicht der verstellbaren Lenksäulenteile kompensieren.

## Claims

1. Steering column in a commercial motor vehicle with a steering wheel which is smoothly variable in inclination and height and can be locked by friction, in which a longitudinally telescopic steering shaft (6) is rotatably mounted in a casing tube (7) and the casing tube (7) is arranged axially displaceably in an externally actuable clamping device between a pair of clamping jaws (11, 12) and adjustably in inclination together with this pair of clamping jaws (11, 12) between mutually braceable parts of a housing (1) fixed on the vehicle body, characterized in that the pair of clamping jaws (11, 12) together with the casing tube (7) is arranged between internal faces of housing parts (1, 2) which are mutually braceable on either side next to the casing tube, in the upper end region of the housing (1) which is longitudinally slotted at least in this upper end region and is fastened by the lower end on the bottom plate (3) of the driver's cab (4).

2. Steering column according to Claim 1, characterized in that, in the region of the bracing device, the housing (1) consists of two profiles (1a, 1b) which are U-shaped in cross section, are directed towards one another with the open profile sides and form slots (17) between the ends of their arms in the upper housing region, plane internal faces of the U-profiles (1a, 1b) cooperating with plane faces on each of the two clamping jaws (11, 12).

3. Steering column according to Claims 1 and 2, characterized in that at least one bracing bolt (22, 23) for pressing together the housing parts (1a, 1b) which are U-shaped in cross section, the clamping jaws (11, 12) and the casing tube (7) is provided on both sides next to the casing tube (7).

4. Steering column according to Claims 1 to 3, characterized in that springs (26, 27) acting on the bracing bolts (22, 23) produce frictional contact between the housing (1) and the casing tube (7).

5. Steering column according to Claims 1 to 4, characterized in that a clamping block (20, 21) of which the external faces cooperate with frictional faces on each of the two clamping jaws (11, 12) is arranged rigidly on the housing (1) between mutually opposed faces of the two clamping jaws (11, 12) on both sides next to the casing tube (7).

6. Steering column according to Claims 1 to 5, characterized in that the clamping jaws (11, 12) are movable in the direction of the longitudinal axis of the steering column (13) on the U-profiles (1a, 1b) forming the housing (1) and are guided so as to tilt round a transverse axis (14 tilt axis).

7. Steering column according to Claims 1 to 6, characterized in that the bracing bolts (22, 23) pass through slots (24, 25) in the clamping jaws (11, 12) of which the width is greater than the bracing bolt diameter and of which the length is adapted to the vertical adjustment region of the steering wheel (9).

8. Steering column according to Claims 1 to 7, characterized in that a pneumatically loaded piston cylinder unit (28, 29, 30) acting on the bracing bolts (22, 23) against the spring tension is provided to remove the frictional contact produced by the spring tension.

9. Steering column according to Claim 6, characterized in that the clamping jaws (11, 12) are each arranged on a pivot journal (18, 19) located in the tilt axis (14) on the housing (1) and engage with a projection located coaxially thereto in a slot on the casing tube (7) extending parallel to the longitudinal axis (13) of the steering column.

10. Steering column according to one or more of Claims 1 to 9, characterized in that supporting springs (33, 34) which compensate the weight of the adjustable steering column parts are arranged between the vertically adjustable parts of the steering column and the housing (1).

## Revendications

1. Colonne de direction dans un véhicule utilitaire comportant un volant, dont l'inclinaison et la hauteur peuvent être réglés progressivement et qui peut être bloqué au moyen d'un système de liaison à frottement, et dans laquelle un arbre de direction (6), qui est télescopique dans la direction longitudinale, est monté de manière à pouvoir tourner dans un tube enveloppe (7) et ce tube est disposé, de manière à être déplaçable axialement dans un dispositif de serrage pouvant être actionné de l'extérieur, entre les mâchoires d'un couple (11,12) de mâchoires de serrage et avec possibilité de réglage de l'inclinaison du tube et conjointement de ce couple de mâchoires de serrage (11,12), entre les parties, pouvant être serrées l'une contre l'autre, d'un boîtier (1) solidaire de la carrosserie, caractérisée en ce que le couple de mâchoires de serrage (11,12) est disposé, ainsi que le tube enveloppe (7), entre des surfaces intérieures de parties (1,2) du boîtier, qui peuvent être serrées l'une contre l'autre sur deux côtés l'une contre l'autre à côté du tube enveloppe, dans la partie d'extrémité supérieure du boîtier (1), qui est fendu dans la direction longitudinale au moins dans cette partie d'extrémité supérieure et est fixée, par son extrémité inférieure, sur la tôle de plancher (3) de la cabine (4) du conducteur.

2. Colonne de direction selon la revendication 1, caractérisée en ce que le boîtier (1) est constitué, dans la zone du dispositif de serrage, par deux profilés (1a, 1b) en forme de U en coupe transversale, dont les côtés ouverts sont dirigés l'un vers l'autre, et qui forment des fentes (17) entre des extrémités de leurs branches dans la partie supérieure du boîtier, des surfaces planes des profilés en U (1a,1b) coopérant avec des surfaces planes situées sur l'une respective des deux mâchoires de serrage (11,12).

3. Colonne de direction selon les revendications 1 et 2, caractérisée en ce qu'au moins un boulon de serrage (22,23) pour le serrage des éléments (1a,1b) du boîtier en forme de U en coupe transversale, des mâchoires de serrage (11,12) et du tube enveloppe (7) est prévu des deux côtés, à côté du tube enveloppe (7).

4. Colonne de direction selon les revendications 1 à 3, caractérisée en ce que des ressorts (26,27), qui agissent sur les boulons de serrage (22,23), réalisent une liaison par frottement entre le boîtier (1) et le tube enveloppe (7).

5. Colonne de direction selon les revendications 1 à 4, caractérisée en ce qu'entre les surfaces, qui sont tournées l'une vers l'autre, des deux mâchoires de serrage (11,12) sont disposés, des deux côtés à côté du tube enveloppe (7) et de façon fixe sur le boîtier (1), des sabots de serrage (20,21), dont les surfaces extérieures coopèrent avec des surfaces de frottement des deux mâchoires de serrage respectives (11,12).

6. Colonne de direction selon les revendications 1 à 5, caractérisée en ce que les mâchoires de serrage (11, 12) sont guidées sur les profilés en U (1a,1b) formant le boîtier (1), en étant mobiles dans la direction de l'axe longitudinal (13) de la colonne de direction et de manière à pouvoir basculer autour d'un axe transversal (axe de basculement 14).

7. Colonne de direction selon les revendications 1 à 6, caractérisée en ce que les boulons de serrage (22, 23) traversent des trous allongés (24,25) des mâchoires de serrage (11,12), dont la largeur est supérieure au diamètre des boulons de serrage et dont la longueur est réglée sur la gamme de réglage en hauteur du volant (9).

8. Colonne de direction selon les revendications 1 à 7, caractérisée en ce que pour supprimer la liaison par frottement produite par la tension des ressorts, il est prévu une unité à piston et cylindre (28,29,30) sollicitée pneumatiquement et qui agit sur les boulons de serrage (22,23) à l'encontre de la tension des ressorts.

9. Colonne de direction selon la revendication 6, caractérisée en ce que les mâchoires de serrage (11,12) sont disposées sur des tourillons respectifs (18,19) disposés sur l'axe de basculement (14) et présents sur le boîtier (1) et pénètrent, par un appendice saillant, qui leur est coaxial, dans un trou allongé qui s'étend parallèlement à l'axe longitudinal (13) de la colonne de direction et est formé dans le tube enveloppe (7).

10. Colonne de direction selon une ou plusieurs des revendications 1 à 9, caractérisée en ce qu'entre les parties réglables en hauteur de la colonne de direction et le boîtier (1) sont disposés des ressorts d'appui (33,34), qui compensent le poids des éléments déplaçables de la colonne de direction.
